(19) Europäisches Patentamt
European Patent Office
Office européen des brevets

(11) **EP 4 614 686 A1**

(12) **EUROPEAN PATENT APPLICATION**
published in accordance with Art. 153(4) EPC

(43) Date of publication:
**10.09.2025   Bulletin 2025/37**

(21) Application number: 23959327.0

(22) Date of filing: 06.12.2023

(51) International Patent Classification (IPC):
**H01M 50/112** *(2021.01)*

(52) Cooperative Patent Classification (CPC):
Y02E 60/10; Y02P 70/50

(86) International application number:
**PCT/CN2023/136666**

(87) International publication number:
**WO 2025/107360 (30.05.2025 Gazette 2025/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   20.11.2023   CN 202311542976

(71) Applicant: **Jiangsu Pylon Battery Co., Ltd.
Yangzhou City, Jiangsu 211400 (CN)**

(72) Inventors:
• **DENG, Wei
Yangzhou, Jiangsu 211400 (CN)**

• **YANG, Qingheng
Yangzhou, Jiangsu 211400 (CN)**
• **TAN, Huiwen
Yangzhou, Jiangsu 211400 (CN)**
• **SONG, Zhangxun
Yangzhou, Jiangsu 211400 (CN)**
• **LIANG, Ting
Yangzhou, Jiangsu 211400 (CN)**
• **HU, Xueping
Yangzhou, Jiangsu 211400 (CN)**
• **YANG, Yishuang
Yangzhou, Jiangsu 211400 (CN)**

(74) Representative: **Loyer & Abello
9, rue Anatole de la Forge
75017 Paris (FR)**

(54) **CYLINDRICAL BATTERY AND PREPARATION METHOD THEREFOR**

(57) The present disclosure provides a cylindrical battery and a preparation method therefor, and relates to the technical field of batteries. The cylindrical battery provided by the present disclosure includes wound cores, a housing, an upper cover plate, and a lower cover plate, wherein at least two wound cores are provided; the (n+1)-th wound core is wound on an outer side wall of the n-th wound core, where n is an integer larger than or equal to 1; the housing is spaced between neighboring wound cores; the housing is wound around an outer side wall of an outermost wound core; the upper cover plate is located on an upper bottom surface of the wound cores; the lower cover plate is located on a lower bottom surface of the wound cores; and the upper cover plate and the lower cover plate are connected to the housing respectively in a sealed manner, so that each of the wound cores is in a separate sealing space. The cylindrical battery has good heat dissipation performance, which avoids the phenomenon of thermal "cohesion" in the battery; and the electrolytes with different functions can be injected into different wound cores, thereby avoiding the phenomenon of performance degradation due to the non-uniformity of battery, so as to improve the service life of the battery.

FIG. 1

## Description

### CROSS-REFERENCE TO RELATED APPLICATION

The present disclosure claims priority to Chinese patent Application No. 202311542976.7, filed with the Chinese Patent Office on December 20, 2023, entitled "CYLINDRICAL BATTERY AND PREPARATION METHOD THEREFOR," the entire contents of which are incorporated herein by reference.

### TECHNICAL FIELD

The present disclosure relates to the technical field of batteries, and in particular to a cylindrical battery and a preparation method therefor.

### BACKGROUND ART

It is well known that during the charging and discharging process of the battery, the battery impedance consumes the energy of the battery, and irreversible heat is generated. The optimal operating temperature for the lithium-ion battery is 20°C~35°C. Once the internal temperature of the battery rises, the service life of the battery decreases exponentially as the temperature gradient increases. In the cylindrical battery, due to the special structure of the cylindrical battery, the heat generated inside the cylindrical battery due to charging and discharging cannot be dispersed in time, which results in uneven thermal distribution of the battery, where the closer to the center of the battery, the higher the temperature. This results in uneven attenuation inside the battery due to its higher temperature and uneven thermal distribution, thereby significantly reducing the service life of the battery.

In view of this, the present disclosure is provided.

### SUMMARY

A first object of the present disclosure is to provide a cylindrical battery to solve at least one of the above problems.

A second object of the present disclosure is to provide a preparation method for the cylindrical battery.

In a first aspect, the present disclosure provides a cylindrical battery, including wound cores, a housing, an upper cover plate, and a lower cover plate, wherein

at least two wound cores are provided; the (n+1)-th wound core is wound on an outer side wall of the n-th wound core, where n is an integer larger than or equal to 1; the housing is spaced between neighboring wound cores; the housing is wound around an outer side wall of an outermost wound core;

the upper cover plate is located on an upper bottom surface of the wound cores; the lower cover plate is located on a lower bottom surface of the wound cores; and the upper cover plate and the lower cover plate are connected to the housing respectively in a sealed manner, so that each of the wound cores is in a separate sealing space.

As an optional technical solution, the wound core is mainly obtained by winding a first separator, a positive electrode sheet, a second separator, and a negative electrode sheet.

As an optional technical solution, a positive active material of the positive electrode sheet includes ternary NCM, lithium iron phosphate, or lithium cobaltate.

As an optional technical solution, a negative active material of the negative electrode sheet includes graphite, hard carbon, soft carbon, silicon negative electrode, or lithium titanate.

As an optional technical solution, the upper cover plate or lower cover plate is provided with a liquid injection hole and an explosion-proof valve, wherein

the liquid injection hole is configured for injecting electrolyte into the wound cores, and
the explosion-proof valve is configured for the explosion-proofing of the wound cores.

As an optional technical solution, the housing includes an aluminum alloy housing or a nickel-plated steel housing.

As an optional technical solution, the wound cores are connected in parallel with each other.

As an optional technical solution, an electrolyte is filled in the wound cores, and

the electrolyte mainly includes a lithium salt, a solvent, and an additive, wherein
the lithium salt includes $LiPF_6$ and LiFSI;
the solvent includes EC (ethylene carbonate), EMC (ethylene methyl carbonate), DMC (dimethyl carbonate), and PC (propylene carbonate); and

the additives include VC (vinylene carbonate), DTD (vinylene sulfate), $LiPO_2F_2$, and FEC (fluorinated ethylene carbonate).

As an optional technical solution, a composition ratio of each component in the electrolyte of each of the wound cores is as follows:

$$y1 = k \times (-0.011\ln(n) + 0.1001),$$

where k = 0.9-1.05 and 1 <n <1000;

$$y2 = 0.14 - y1;$$

$$y3 = 30\% \times \omega;$$

$$y4 = (-0.039\ln(n) + 0.351) \times \omega;$$

$$y5 = (0.0563\ln(n) + 0.301) \times \omega;$$

$$y6 = (1 - y3 - y4 - y5) \times \omega;$$

$$\omega = 1-y1-y2-y7-y8-y9-y10;$$

$$y7 = 0.000032n^2 - 0.000485n + 0.025452;$$

$$y8 = 0.00235\ln(n) + 0.0002, y8 \leq 1\%;$$

$$y9 = -0.0005n + 0.0025, 0 \leq y9 \leq 0.2\%;$$

$$y10 = 0.3\%;$$

and

$$y1+y2+y3+y4+y5+y6+y7+y8+y9+y10=1,$$

where
y1 is a mass percentage of $LiPF_6$; y2 is a mass percentage of LiFSI; y3 is a mass percentage of EC; y4 is a mass percentage of EMC; y5 is a mass percentage of DMC; y6 is a mass percentage of PC; y7 is a mass percentage of VC; y8 is a mass percentage of DTD; y9 is a mass percentage of $LiPO_2F_2$; and y10 is a mass percentage of FEC.

In a second aspect, the present disclosure provides a preparation method for the above cylindrical battery, including the following steps:

a. winding a first separator, a first negative electrode sheet, a first separator, and a first positive electrode sheet of a first wound core on a winding needle to form the first wound core, and then arranging the first wound core into a first housing;

b. winding a first separator, a first negative electrode sheet, a first separator, and a first positive electrode sheet of (n+1)-th wound core on the n-th wound core to form the (n+1)-th wound core, and then arranging the (n+1)-th wound core into a (n+1)-th housing; and
c. welding the upper cover plate and the lower cover plate after all wound cores are made, so that a cylindrical battery is prepared by liquid injection and formation.

Compared with the prior art, the present disclosure has the following beneficial effects.
In the cylindrical battery provided by the present disclosure, each of the wound cores is isolated in a separate sealing space through the sealing connection between the housing and the upper and lower cover plates; the housing is spaced between neighboring wound cores; and the heat generate by the wound core in each space can be dissipated in time by the housing, so as to reduce the overall heat generated in the battery and greatly avoid the phenomenon of thermal "cohesion" in the battery, thereby improving the service life of the battery.
In the present disclosure, the electrolytes with different functions can be injected into different wound cores, which truly achieves targeted treatment based on the heat generation characteristic of the battery. Therefore, this can reduce the phenomenon of uneven performance degradation of the battery, so as to improve the service life of the battery.
The present disclosure can realize the non-shared liquid in the same battery system, which greatly avoids the phenomenon of performance degradation of the battery caused by the natural defects of the structural design of the current batteries. The long-life battery can be applied in different scenarios, and the requirements of the application scenarios in different wound cores can be achieved by the formula, the material combination, and the wound core design, which greatly avoids the "natural defects" in the battery.

**BRIEF DESCRIPTION OF DRAWINGS**

In order to more clearly illustrate the technical solutions in the specific embodiments or prior art of the present disclosure, the drawings used in the description of the specific embodiments or prior art will be briefly introduced below. It is obvious that the drawings in the following description are some embodiments of the present disclosure, and for persons of ordinary skill in the art, other drawings can be obtained based on these drawings without inventive efforts.

FIG. 1 shows a sectional schematic diagram of a battery;
FIG. 2 shows a schematic diagram of an upper cover plate of a battery;
FIG. 3 shows a schematic diagram of a lower cover plate of a battery;
FIG. 4 shows results of battery temperature rise; and
FIG. 5 shows results of battery capacity retention.

**DETAILED DESCRIPTION OF EMBODIMENTS**

The embodiment solutions of the present disclosure will be described in detail in conjunction with embodiments and examples as follows. It will be understood by those skilled in the art that the following embodiments and examples are used only to illustrate the present disclosure, and should not be regarded as a limitation of the scope of the present disclosure. Based on the embodiments in the present disclosure, all other embodiments obtained by a person of ordinary skill in the art without inventive efforts all fall within the scope of protection of the present disclosure. If not specifically indicated, conventional conditions or those recommended by the manufacturer shall be applied. Reagents or instruments not specified by a manufacturer are all conventional products that are commercially available.
In a first aspect, the present disclosure provides a cylindrical battery, including wound cores, a housing, an upper cover plate, and a lower cover plate.
At least two wound cores are provided; the (n+1)-th wound core is wound on an outer side wall of the n-th wound core, where n is an integer larger than or equal to 1; the housing is spaced between neighboring wound cores; and the housing is wound around an outer side wall of an outermost wound core.
The upper cover plate is located on an upper bottom surface of the wound cores; the lower cover plate is located on a lower bottom surface of the wound cores; and the upper cover plate and the lower cover plate are connected to the housing respectively in a sealed manner, so that each of the wound cores is in a separate sealing space.
In the cylindrical battery provided by the present disclosure, each of the wound cores is isolated in a separate sealing space through the sealing connection between the housing and the upper and lower cover plates, and the housing is spaced between neighboring wound cores. Since the thermal conduction between solids is better than the thermal conduction between a solid and a gas, in the present disclosure, the manner of thermal conduction between solids is enhanced by providing a housing between the wound cells. Therefore, the heat generated by the wound core in each space can be dissipated out by the housing in time, so as to reduce the overall heat generated in the battery and greatly avoid the phenomenon of thermal "cohesion" in the battery, thereby improving the service life of the battery.
In the present disclosure, the electrolytes with different functions can be injected into different wound cores, which truly achieves the target treatment based on the heat production characteristic of the battery, so that it can avoid the phenomenon of performance degradation due to the non-uniformity of battery, so as to improve the service life of the battery.

The present disclosure can realize the non-shared liquid in the same battery system, which greatly avoids the phenomenon of performance degradation of the battery caused by the natural defects of the structural design of the current batteries. The long-life battery can be applied in different scenarios, and the requirements of the application scenarios in different wound cores can be achieved by the formula, the material combination, and the design of the wound core, which greatly avoids the "natural defects" in the battery.

In some optional embodiments, the wound core is mainly obtained by winding a first separator, a positive electrode sheet, a second separator, and a negative electrode sheet.

In some optional embodiments, a positive active material of the positive electrode sheet includes, but is not limited to, ternary NCM, lithium iron phosphate, or lithium cobaltate, or it can adopt other positive active materials known in the art.

In some optional embodiments, a negative active material of the negative electrode sheet includes, but is not limited to, graphite, hard carbon, soft carbon, silicon negative electrode, or lithium titanate, or it can adopt other negative active materials known in the art.

In some optional embodiments, the separator includes, but is not limited to, PE (polyethylene) or PP (polypropylene), or it can adopt other battery separators known in the art.

In some optional embodiments, the upper cover plate or lower cover plate is provided with a liquid injection hole and an explosion-proof valve.

The liquid injection hole is configured for injecting electrolyte into the wound cores, and it includes a first liquid injection hole, a second liquid injection hole, a third liquid injection hole, and an n-th liquid injection hole.

The explosion-proof valve is configured for the explosion-proofing of the wound cores, and it includes a first explosion-proof valve, a second explosion-proof valve, a third explosion-proof valve, and an n-th explosion-proof valve.

It should be noted that the wound cores are separated from each other. In order to realize the liquid injection and explosion-proofing of each wound core, it needs to design corresponding liquid injection holes and explosion-proof valves for each wound core.

In some optional embodiments, the upper cover plate and the lower cover plate are welded to the housing, so as to form a first welding region, a second welding region, a third welding region, and an n-th welding region.

In some optional embodiments, the housing includes an aluminum alloy housing or a nickel-plated steel housing.

In some optional embodiments, the wound cores are connected in parallel with each other.

In the present disclosure, the electrode lugs of the wound core are connected to the cover plates by the conventional connection method in the field. For example, after the positive electrode lug of the wound core is welded to the current collecting plate, it is connected to the positive electrode cover plate by the connecting sheet, and after the negative electrode lug of the wound core is welded to the current collecting plate, it is connected to the negative electrode cover plate by the connecting sheet.

In some optional embodiments, the electrolyte is filled in the wound cores.

The electrolyte is mainly composed of a lithium salt, a solvent, and an additive.

The lithium salt includes $LiPF_6$ and LiFSI.

The solvent includes EC (ethylene carbonate), EMC (ethylene methyl carbonate), DMC (dimethyl carbonate), and PC (propylene carbonate).

The additive includes VC (vinylene carbonate), DTD (vinylene sulfate), $LiPO_2F_2$, and FEC (fluorinated ethylene carbonate).

In some optional embodiments, a composition ratio of each component in the electrolyte of each of the wound cores is as follows:

$$y1 = k \times (-0.011\ln(n) + 0.1001),$$

where k = 0.9-1.05 and 1 <n <1000;

$$y2 = 0.14 - y1;$$

$$y3 = 30\% \times \omega;$$

$$y4 = (-0.039\ln(n) + 0.351) \times \omega;$$

$$y5 = (0.0563\ln(n) + 0.301) \times \omega;$$

$$y6 = (1 - y3 - y4 - y5) \times \omega;$$

$$\omega = 1 - y1 - y2 - y7 - y8 - y9 - y10;$$

$$y7 = 0.000032n^2 - 0.000485n + 0.025452;$$

$$y8 = 0.00235\ln(n) + 0.0002, \quad y8 \leq 1\%;$$

$$y9 = -0.0005n + 0.0025, \quad 0 \leq y9 \leq 0.2\%;$$

$$y10 = 0.3\%;$$

and

$$y1 + y2 + y3 + y4 + y5 + y6 + y7 + y8 + y9 + y10 = 1,$$

where

y1 is a mass percentage of $LiPF_6$; y2 is a mass percentage of LiFSI; y3 is a mass percentage of EC; y4 is a mass percentage of EMC; y5 is a mass percentage of DMC; y6 is a mass percentage of PC; y7 is a mass percentage of VC; y8 is a mass percentage of DTD; y9 is a mass percentage of $LiPO_2F_2$; and y10 is a mass percentage of FEC.

In a second aspect, the present disclosure provides a preparation method for the above cylindrical battery, including the following steps:

a. winding a first separator, a first negative electrode sheet, a first separator, and a first positive electrode sheet of a first wound core on a winding needle to form the first wound core (a central hole formed after the winding needle is pulled out), and then arranging the first wound core into a first housing;

b. winding a first separator, a first negative electrode sheet, a first separator, and a first positive electrode sheet of (n+1)-th wound core on the n-th wound core to form the (n+1)-th wound core, and then arranging the (n+1)-th wound core into a (n+1)-th housing; and

c. welding the upper cover plate and the lower cover plate after all wound cores are made, so that a cylindrical battery is prepared by liquid injection and formation.

The preparation method provided by the present disclosure is simple and convenient, and the prepared cylindrical battery has good heat dissipation performance and long service life.

The present disclosure is further described below by specific examples and comparative examples. However, it should be understood that these examples are merely for the purpose of a more detailed description and should not be understood as a limitation of the present disclosure in any form.

Example 1

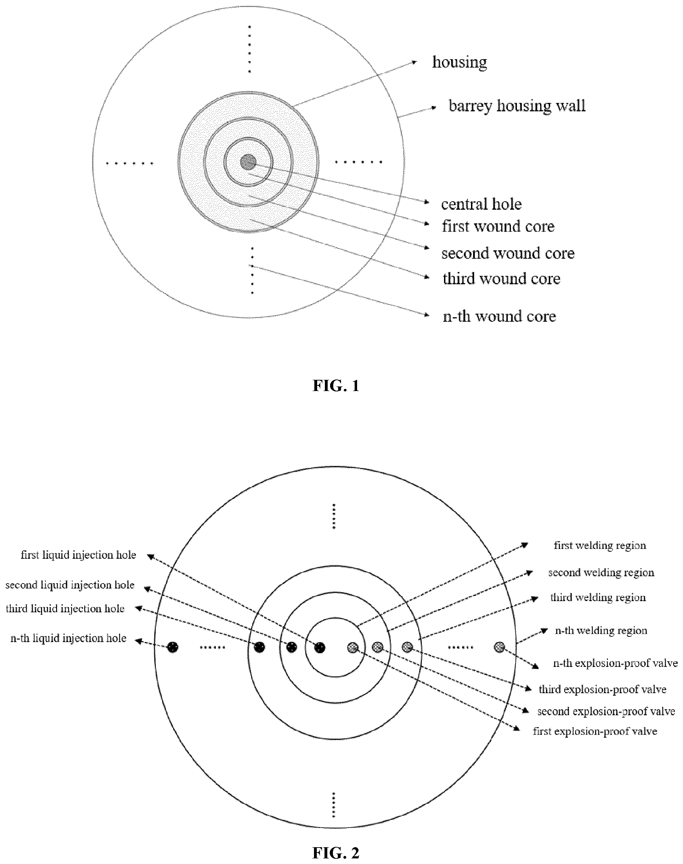

A cylindrical battery was prepared, as shown in FIG. 1- FIG. 3, including wound cores, a housing, an upper cover plate, and a lower cover plate.

The wound core was mainly obtained by winding a first separator, a positive electrode sheet, a second separator, and a negative electrode sheet; three wound cores were provided, and each of the cores was connected in parallel; the second wound core was wound on an outer side wall of the first wound core; the third wound core was wound on an outer side wall of the second wound core; the housing was spaced between neighboring wound cores; and the housing was wound around an outer side wall of the outermost wound core.

The positive electrode sheet was a lithium iron phosphate positive electrode sheet; the negative electrode sheet was a graphite negative electrode sheet; the separator was a PP separator; and the housing was an aluminum alloy housing.

The upper cover plate was located on an upper bottom surface of the wound cores; the lower cover plate was located on a lower bottom surface of the wound cores; the upper cover plate and the lower cover plate were connected to the housing respectively in a sealed manner, so that each of the wound cores was in a separate sealing space; and the upper cover plate was provided with corresponding liquid injection holes and explosion-proof valves for each of the wound cores.

The composition ratio of each component in the electrolyte of each of the wound cores is shown in Table 1.

The preparation method is as follows.

a. The first separator, the first negative electrode sheet, the first separator, and the first positive electrode sheet of the first wound core on the winding needle were wound to form the first wound core, and then the first wound core was arranged into the first housing

b. The first separator, the first negative electrode sheet, the first separator, and the first positive electrode sheet of the second wound core were wound on the first wound core to form the second wound core, and then the second wound core was arranged into the second housing.

c. The first separator, the first negative electrode sheet, the first separator, and the first positive electrode sheet of the third wound core were wound on the second wound core to form the third wound core, and then the third wound core was arranged into the third housing.

d. The upper cover plate and the lower cover plate were welded after all wound cores were made, so that a cylindrical battery was prepared by liquid injection and formation.

The electrode lugs of the wound core were connected to the cover plates by a conventional method.

Example 2

A cylindrical battery was prepared, differing from Example 1 in that the composition ratio of each component in the electrolyte of each wound core was different, and the ratios of components are shown in Table 1.

Example 3

A cylindrical battery was prepared, differing from Example 1 in that the composition ratio of each component in the electrolyte of each wound core was different, and the ratios of components are shown in Table 1.

Table 1

| Examples | Example 1 | | | Example 2 | | | Example 3 | | |
|---|---|---|---|---|---|---|---|---|---|
| | Core 1 | Core 2 | Core 3 | Core 1 | Core 2 | Core 3 | Core 1 | Core 2 | Core 3 |
| n | 1 | 2 | 3 | 1 | 2 | 3 | 1 | 2 | 3 |
| k | 1.02 | 1.02 | 1.02 | 1.05 | 1.05 | 1.05 | 0.9 | 0.9 | 0.9 |
| y1 | 10.2% | 9.4% | 9.0% | 10.5% | 9.7% | 9.2% | 9.0% | 8.3% | 7.9% |
| y2 | 3.8% | 4.6% | 5.0% | 3.5% | 4.3% | 4.8% | 5.0% | 5.7% | 6.1% |
| y3 | 24.9% | 24.9% | 24.8% | 24.9% | 24.9% | 24.8% | 24.9% | 24.9% | 24.8% |
| y4 | 29.1% | 26.8% | 25.5% | 29.1% | 26.8% | 25.5% | 29.1% | 26.8% | 25.5% |
| y5 | 25.0% | 28.2% | 30.0% | 25.0% | 28.2% | 30.0% | 25.0% | 28.2% | 30.0% |
| y6 | 17.4% | 16.7% | 16.2% | 17.4% | 16.7% | 16.2% | 17.4% | 16.7% | 16.2% |
| y7 | 2.5% | 2.5% | 2.4% | 2.5% | 2.5% | 2.4% | 2.5% | 2.5% | 2.4% |
| y8 | 0.02% | 0.24% | 0.38% | 0.02% | 0.24% | 0.38% | 0.02% | 0.24% | 0.38% |
| y9 | 0.2% | 0.2% | 0.1% | 0.2% | 0.2% | 0.1% | 0.2% | 0.2% | 0.1% |
| y10 | 0.3% | 0.3% | 0.3% | 0.3% | 0.3% | 0.3% | 0.3% | 0.3% | 0.3% |
| ω | 83.0% | 82.8% | 82.8% | 83.0% | 82.8% | 83.0% | 82.8% | 82.8% | 82.8% |

Comparative Example 1

A cylindrical battery was prepared, differing from Example 1 in that no housing was arranged between the wound cores, and the electrolyte was adopted as the electrolyte of the first wound core in Example 1.

Comparative Example 2

A cylindrical battery was prepared, differing from Example 1 in that no housing was arranged between the wound cores, and the electrolyte was adopted as the electrolyte of the second wound core in Example 1.

Comparative Example 3

A cylindrical battery was prepared, differing from Example 1 in that no housing was arranged between the wound cores, and the electrolyte was adopted as the electrolyte of the third wound core in Example 1.

Example 4

A cylindrical battery was prepared, differing from Example 1 in that the electrolyte of each core was adopted as the electrolyte of the second wound core in Example 1.

Experimental Example 1

The cores prepared in Examples 1-4 and Comparative Examples 1-3 were tested; the system of the cores was the LFP/Gr system, and the nominal capacity of the cores was 10Ah. The test contents and results are as follows.

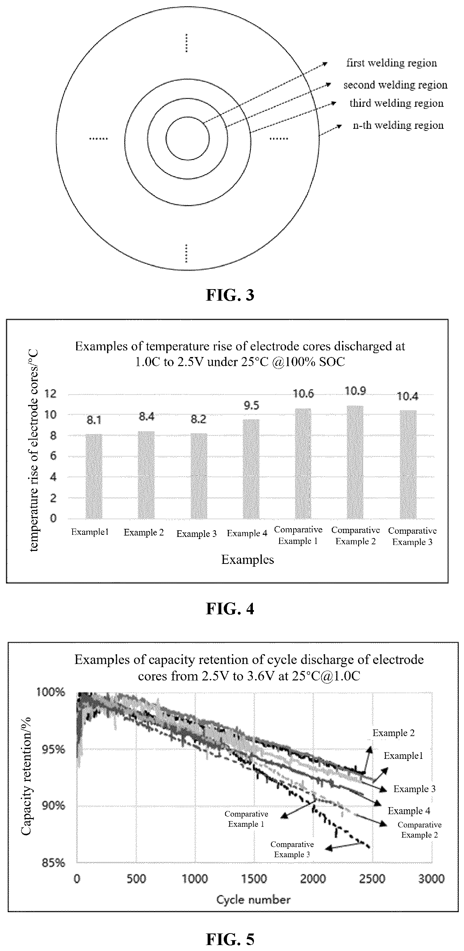

1. The cores were discharged at 1.0C from the state of 100% SOC to 2.5V under 25°C. The results of the temperature rise of cores are shown in FIG. 4.
As can be seen from FIG. 4, the temperature rise of the cores provided in Examples 1-4 is lower than that of the cores in Comparative Examples 1-3, which indicates that, through the arrangement of the housing between the wound cores, the cores provided by the present disclosure further improves the heat dissipation performance of the core. The temperatures of the cores in Examples 1-3 are lower than that of Example 4, which indicates that, through designing the electrolyte matching with the battery according to the heat generation characteristics of the battery in the present disclosure, the heat dissipation effect of the battery is further improved.
2. The cores were charged and discharged at 1.0C under 25°C, the charging cutoff voltage was 3.65 V, and the discharging cutoff voltage was 2.5 V. The test results are shown in FIG. 5.

As can be seen from the figure, for the capacity retention, the capacity retentions of the cores provided in Examples 1-4 were higher than that of Comparative Examples 1-3 at the same number of cycles, which indicates that, through the arrangement of the housing between the wound cores, the cores provided by the present disclosure further improves the heat cycle life of the core. The capacity retentions of the cores in Examples 1-3 at 2400 weeks were higher than that of Example 4, which indicates that, through designing the electrolyte matching with the battery by the present disclosure, the cycle life of the battery is further improved.

Finally, it should be noted that the above embodiments are only used to illustrate the technical solutions of the present disclosure, and not to restrict them. Although the present disclosure is described in detail with reference to the foregoing embodiments, a person of ordinary skill in the art should understand that it is still possible to modify the technical solutions recorded in the foregoing embodiments or to make equivalent substitutions for some or all of the technical features therein; and these modifications or replacements do not take the essence of the corresponding technical solutions out of the scope of the technical solutions of the embodiments of the present disclosure.

**Industrial Applicability**

The present disclosure provides a cylindrical battery and a preparation method therefor, relating to the technical field of batteries. The cylindrical battery provided by the present disclosure includes wound cores, a housing, an upper cover plate, and a lower cover plate, wherein at least two wound cores are provided; the (n+1)-th wound core is wound on an outer side wall of the n-th wound core, where n is an integer larger than or equal to 1; the housing is spaced between neighboring wound cores; the housing is wound around an outer side wall of an outermost wound core; the upper cover plate is located on an upper bottom surface of the wound cores; the lower cover plate is located on a lower bottom surface of the wound cores; and the upper cover plate and the lower cover plate are connected to the housing respectively in a sealed manner, so that each of the wound cores is in a separate sealing space. The cylindrical battery has good heat dissipation performance, which avoids the phenomenon of thermal "cohesion" in the battery; and the electrolytes with different functions can be injected into different wound cores, thereby avoiding the phenomenon of performance degradation due to the non-uniformity of battery, so as to improve the service life of the battery.

Additionally, it will be understood that the cylindrical battery and the preparation method of the present disclosure are reproducible and can be used in multiple industrial applications. For example, the cylindrical battery and the preparation method of the present disclosure can be applied in the technical field of batteries.

**Claims**

1. A cylindrical battery, comprising wound cores, a housing, an upper cover plate, and a lower cover plate, wherein

   at least two wound cores are provided; an (n+1)-th wound core is wound on an outer side wall of an n-th wound core, where n is an integer larger than or equal to 1; the housing is spaced between neighboring wound cores; the housing is wound around an outer side wall of an outermost wound core; and
   the upper cover plate is located on an upper bottom surface of the wound cores; the lower cover plate is located on a lower bottom surface of the wound cores; and the upper cover plate and the lower cover plate are respectively connected to the housing in a sealed manner, so that each of the wound cores is in a separate sealing space.

2. The cylindrical battery according to claim 1, wherein the wound core is obtained by winding a first separator, a positive electrode sheet, a second separator, and a negative electrode sheet.

3. The cylindrical battery according to claim 2, wherein a positive active material of the positive electrode sheet comprises ternary NCM, lithium iron phosphate, or lithium cobaltate.

4. The cylindrical battery according to claim 2, wherein a negative active material of the negative electrode sheet comprises graphite, hard carbon, soft carbon, silicon negative electrode, or lithium titanate.

5. The cylindrical battery according to claim 1, wherein the upper cover plate or lower cover plate is provided with a liquid injection hole and an explosion-proof valve;

   the liquid injection hole is configured for injecting electrolyte into the wound cores; and
   the explosion-proof valve is configured for explosion-proofing of the wound cores.

6. The cylindrical battery according to claim 1, wherein the housing comprises an aluminum alloy housing or a nickel-plated steel housing.

7. The cylindrical battery according to claim 1, wherein the wound cores are connected in parallel with each other.

8. The cylindrical battery according to claim 1, wherein an electrolyte is filled in the wound cores, and

   the electrolyte comprises a lithium salt, a solvent, and an additive, wherein
   the lithium salt comprises $LiPF_6$ and LiFSI;
   the solvent comprises EC, EMC, DMC, and PC; and
   the additive comprises VC, DTD, $LiPO_2F_2$, and FEC.

9. The cylindrical battery according to claim 7, wherein a composition ratio of each component in the electrolyte of each of the wound cores is as follows:

$$y1 = k \times (-0.011\ln(n) + 0.1001),$$

where k = 0.9-1.05 and 1 <n <1000;

$$y2 = 0.14 - y1;$$

$$y3 = 30\% \times \omega;$$

$$y4 = (\text{-}0.039\ln(n) + 0.351) \times \omega;$$

$$y5 = (0.0563\ln(n) + 0.301) \times \omega;$$

$$y6 = (1 - y3 - y4 - y5) \times \omega;$$

$$\omega = 1\text{-}y1\text{-}y2\text{-}y7\text{-}y8\text{-}y9\text{-}y10;$$

$$y7 = 0.\,000032n^2 - 0.000485n + 0.025452;$$

$$y8 = 0.00235\ln(n) + 0.0002, y8 \leq 1\%;$$

$$y9 = \text{-}0.0005n + 0.0025, 0 \leq y9 \leq 0.2\%;$$

$$y10 = 0.3\%;$$

and

$$y1+y2+y3+y4+y5+y6+y7+y8+y9+y10=1,$$

where
y1 is a mass percentage of $LiPF_6$; y2 is a mass percentage of LiFSI; y3 is a mass percentage of EC; y4 is a mass percentage of EMC; y5 is a mass percentage of DMC; y6 is a mass percentage of PC; y7 is a mass percentage of VC; y8 is a mass percentage of DTD; y9 is a mass percentage of $LiPO_2F_2$; and y10 is a mass percentage of FEC.

10. The preparation method for the cylindrical battery according to any one of claims 1-9, comprising following steps:

    a. winding a first separator, a first negative electrode sheet, a first separator, and a first positive electrode sheet of a first wound core on a winding needle to form the first wound core, and then arranging the first wound core into a first housing;
    b. winding a first separator, a first negative electrode sheet, a first separator, and a first positive electrode sheet of an (n+1)-th wound core on an n-th wound core to form the (n+1)-th wound core, and then arranging the (n+1)-th wound core into a (n+1)-th housing; and
    c. welding the upper cover plate and the lower cover plate after all wound cores are made, so that a cylindrical battery is prepared by liquid injection and formation.

**FIG. 1**

**FIG. 2**

FIG. 3

FIG. 4

FIG. 5

## INTERNATIONAL SEARCH REPORT

| International application No. |
|---|
| **PCT/CN2023/136666** |

### A. CLASSIFICATION OF SUBJECT MATTER

H01M50/112(2021.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 圆柱, 电池, 卷绕, 电芯, 壳, 隔膜, 隔板, 热量, 聚, 散热, 防爆, 注液, 密封, 顶盖, cylindrical cell, battery, wind+, coiling, electronic chip, diaphragm, heat, aggregate, dissipation, anti-explosion, liquid injection, seal

### C. DOCUMENTS CONSIDERED TO BE RELEVANT

| Category* | Citation of document, with indication, where appropriate, of the relevant passages | Relevant to claim No. |
|---|---|---|
| Y | CN 116826142 A (ZHONGXING PYLON BATTERY CO., LTD.) 29 September 2023 (2023-09-29)<br>description, paragraphs [0004]-[0083], and figure 1 | 1-8, 10 |
| Y | CN 219553727 U (SHANGHAI REPT QINGCHUANG NEW ENERGY CO., LTD.) 18 August 2023 (2023-08-18)<br>description, paragraphs [0004]-[0069] | 1-8, 10 |
| Y | CN 115832204 A (HENAN TROILY NEW ENERGY TECHNOLOGY CO., LTD.) 21 March 2023 (2023-03-21)<br>description, paragraphs [0003]-[0019], and figures 1-2 | 1-8, 10 |
| Y | WO 2019149103 A1 (HUIZHOU TOPBAND ELECTRICAL TECHNOLOGY CO., LTD.) 08 August 2019 (2019-08-08)<br>description, paragraphs [0051]-[0082] | 1-8, 10 |
| A | US 2022094019 A1 (CEIGARD, LLC) 24 March 2022 (2022-03-24)<br>entire document | 1-10 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **26 July 2024** | **01 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## EP 4 614 686 A1

<table>
<tr><td colspan="2">INTERNATIONAL SEARCH REPORT<br>Information on patent family members</td><td colspan="2">International application No.<br>**PCT/CN2023/136666**</td></tr>
<tr><td>Patent document<br>cited in search report</td><td>Publication date<br>(day/month/year)</td><td>Patent family member(s)</td><td>Publication date<br>(day/month/year)</td></tr>
<tr><td>CN 116826142 A</td><td>29 September 2023</td><td>None</td><td></td></tr>
<tr><td>CN 219553727 U</td><td>18 August 2023</td><td>None</td><td></td></tr>
<tr><td>CN 115832204 A</td><td>21 March 2023</td><td>None</td><td></td></tr>
<tr><td>WO 2019149103 A1</td><td>08 August 2019</td><td>CN 108461700 A</td><td>28 August 2018</td></tr>
<tr><td>US 2022094019 A1</td><td>24 March 2022</td><td>EP 3906589 A1<br>TW 202036960 A<br>JP 2022517191 A<br>AU 2020204698 A1<br>WO 2020142702 A1<br>KR 20210110692 A<br>CN 113544904 A</td><td>10 November 2021<br>01 October 2020<br>07 March 2022<br>12 August 2021<br>09 July 2020<br>08 September 2021<br>22 October 2021</td></tr>
</table>

Form PCT/ISA/210 (patent family annex) (July 2022)

**EP 4 614 686 A1**

**Patent documents cited in the description**

- CN 202311542976